# EUROPEAN PATENT SPECIFICATION

(11) **EP 1 862 059 B1**
(45) Date of publication and mention of the grant of the patent: **22.12.2010**
(21) Application number: 07425313.9
(22) Date of filing: 23.05.2007
(51) Int. Cl.: A01D 46/253, A01D 46/26

(54) **Mechanical device for the harvest of fruits from the respective plants**
Mechanische Vorrichtung für Obsternte von entsprechenden Pflanzen
Dispositif mécanique pour cueillir des fruits sur leurs arbres respectifs

(30) Priority: 29.05.2006 IT BS20060116
(43) Date of publication of application: 05.12.2007
(73) Proprietor: Nardicchia, Vilde, 65010 Montebello Di Bertona (PE) (IT)
(72) Inventor: Nardicchia, Vilde, 65010 Montebello Di Bertona (PE) (IT)
(74) Representative: Sangiacomo, Fulvia

(56) References cited:
- EP-A- 1 671 531
- EP-A1- 1 654 922
- DE-B- 1 257 476
- FR-A- 2 159 535
- US-A- 3 237 389

## Description

### Field of the Invention

This invention concerns in general an agricultural device and refers in particular to a tool for mechanical harvesting of olives, coffee drupes and other fruit from their respective plants.

### State of the Technique

Mechanical tools functioning by vibrating, shaking and/or pulling have been proposed, in particular for harvesting olives, which are able to reduce the fatigue of the workers engaged in harvesting. They are tools that have at least one or, preferably, a number of tools of varying configurations, revolving or oscillating, so as to be able to move between the branches of the plants causing the fruit to drop and which can be attached to a pole and used easily for aerial work from the ground.

In this regard, patents ES-2 076 119, CH-452 981 and DE-3 507 545 appear indicative of the state of the technique in the same way as, and even more so, the European Patent EP-1 207 738. Moreover, the document EP-A1-1 654 922 is also representative of the prior art and corresponds to the preamble of claim 1.

The tools known and referred to above are however open to improvements from the construction point of view and as regards to configuration and efficiency.

### Objective and Summary of the Invention

In fact one of the objectives of this invention is to supply a multiuse tool for the above stated use of the original configuration and assembled with an innovative device and combination of rotating tools, capable of interacting to improve the capacity to penetrate between the branches of a plant and the effectiveness in the harvesting of the fruit, facilitating their removal from the branches, without however causing bruising, or other damage.

This objective is reached, according to the invention in the multi-tool device for collecting olives, coffee drupes and the like in compliance with the preamble of claim 1 characterized in that each peripheral tool (12) is slanted, for all its length compared to said rotation axis starting from the front face of the supporting body, and in that the additional tool (13) has a shape different from said peripheral tools and rotates about an axis coincident with its geometric axis.

### Brief Description of the Drawings

The invention will however be illustrated in greater detail in the course of this description made in reference to the example of an arrangement represented in the indicative and not limiting drawings, in which:
Fig. 1 shows a view in perspective of the tool with an additional tool in the shape of a blade;
Fig. 2 shows a side view ;
Fig. 3 shows a view from the front;
Fig. 4 schematizes the movement of a slanting tool and the central blade shaped tool; and

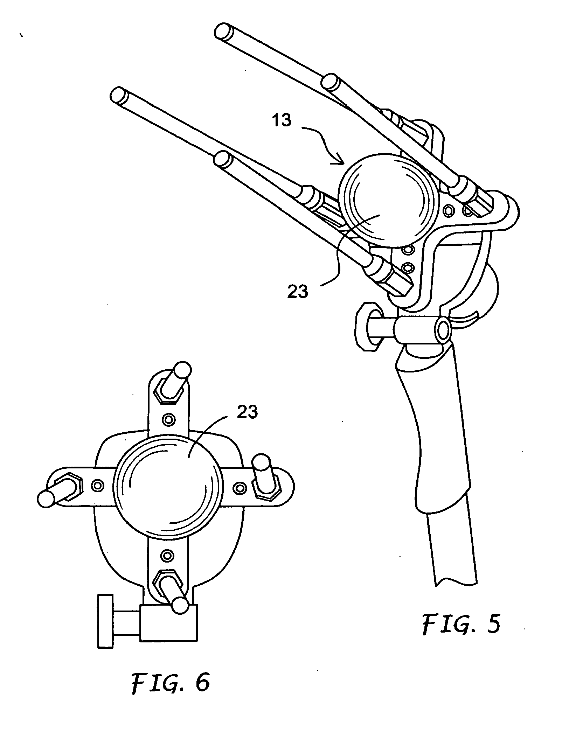

Figs. 5 and 6 show two views in perspective and from the front of a tool with an additional roundish tool.

### Detailed Description of the Invention

As represented, the harvesting tool proposed here basically comprises a supporting body 11, a series of first rotating tools 12 with a first shape, at least an additional tool 13, also rotating, with a different shape, a geared motor group 14, preferably electric, controlling all the operating tools 12, 13, a direct handle 15 and/or an extension pole and grip 16 for using the tool at a height.

The supporting body 11 has a radial arrangement with two, three four or more arms 11' extending radially from a central point 11" of the body, all either of the same or different lengths. The body 11 has a front and rear face. The operating tools 12, 13 extend from the front face, the first, peripherally, at least to the ends of the radial arms 11' and the second to the centre of the body, whereas the geared motor group 14 is fixed to the rear face of the body.

More in detail, the supporting body 11 is made up of two shells made of a light material, such as an aluminium alloy, magnesium etc, joined complementarily and fixed between them to form a chamber. This chamber houses the transmission components, preferably gear operated, to drive each of the operating tools by means of a gearmotor group.

For simplicity, but technicians in this sector will however be able to understand the arrangement, only the rotation axes 17 (at right angles to the front face of the supporting body) of the gears starting from a central axis, connected to the output shaft of the gearmotor group and coincident with the rotation axis of the additional tool 13, as far as the terminal coincident axes and coupled to the axes of the tools 12 at the ends of the arms of the supporting body of such a transmission are shown.

Each rotating operating tool 12 is made up of a rod 12' having one end attached to the axis 17 of the respective drive gear by means of a base coupling adapter 18, whereas its other end is free. The rod 12' can be flexible, but preferably rigid, straight, corrugated or however shaped in length, with rounded, elliptic or multilateral section. Its length can be decided according to requirements and is however assembled using a removable and interchangeable system.

In any case, each rod, that is each rotating operating tool 12, is positioned at a slant with regards to its rotating axis and so as to form an angle different from 90° with the front face of the supporting body. Preferably, but not necessarily, all the operating tools 12 are at the same angle, but some can be staggered compared with the others starting from the rotation direction.

As regards to the slanted assembly of the operating tools 12, the adapter joint of each rod is provided with a bore that is at an angle to the geometric axis of the joint and joins with the rotation axis X of the respective drive gear which, as stated above, is, on the contrary, at a right angle to the front face 11' of the supporting body.

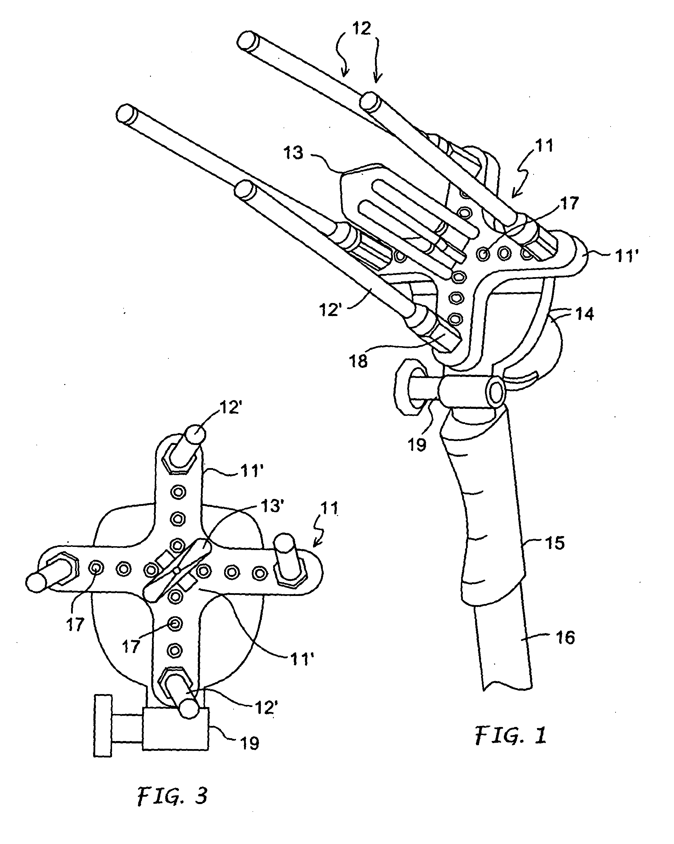

The additional tool 13 can be blade shaped 13' as shown in Figs. 1-4, with almost semicircular sides, parallel or slanting, and with one pointed or rounded end free with or without openings provided crossways. Its overall configuration can however be compared to that of an analogous blade, described in a previous patent of the same applicant and usable with similar equipment for harvesting olives.

As an alternative the additional tool 13 can be roundish, that is sphere shaped 23, as in Figs, 5 and 6, or ellipsoidal or cylindrical or some similar shape, and possibly made of plastic.

However, the additional tool 13 is positioned between the operating tools 12, that is in the centre of the supporting body, perpendicular to the front face of the latter. It is coupled coaxially with its respective drive gear and so that the rotation axis coincides with its geometric axis.

The central additional tool 13 and the peripheral operating tools 12 can be set up to turn at the same or different speeds.

The direct handgrip 15, where envisaged, or as an alternative, the extension pole and grip 16 can be connected to the supporting body or, as shown in the drawings, to a part of the gearmotor group 14. However, to permit the tool to be moved using the gripping means 15 or 16, in particular for aerial work from the ground, these gripping means are connected to the tool using an articulated joint 19 adjustable to several positions, according to requirements. The rest however, including the configuration of the extension pole 16, its modularity/decomposability, and the feed and control methods of the gearmotor group, using an electric cable that extends on the pole starting from a battery or from another source of electric energy, can be similar to those described in the abovementioned EP-1 207 738, therefore they do not require to be illustrated in detail.

When the tool is powered and in use, the peripheral operating tools 12 and the central additional tool 13, all turning, can move between long branches, twigs and foliage aimed at shaking and "combing" them to remove the fruit. Each peripheral operating tool 12 turns on its axis and, thanks to its slant compared to the rotation axis, it also turns performing wider circular trajectories, consequently at higher speeds, starting from its base up to its free end.

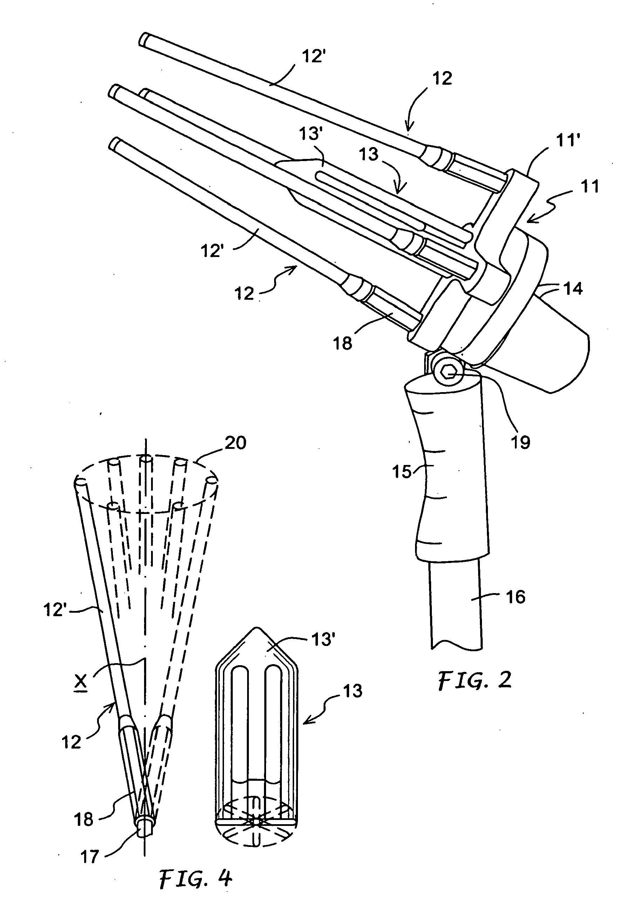

In Fig 4 the rotation and revolution movements of an operating tool 12 are schematized also in relation to the rotation of the central additional tool 13, here in the shape of a blade. The movements of the operating tool 12 basically follow a conical surface 20 with the base at the free end of the rod and apex on a level with the base joint.

The central additional tool on the other hand turns only on its axis. However, because of its shape, on each tum it finds itself from time to time with its sides, in the case of a blade or with its peripheral surface when it is roundish, closer to or further away from each peripheral operating tool 12. In this way, between the additional tool and the peripheral operating tools, due also to the angle of the latter, varying spaces are formed which permit them to receive and kinematically adhere to the branches, twigs and foliage of a plant.

In fact, the tools 12,13 operate in combination both by shaking the plant sufficiently to detach and make the fruit fall and to detach the more resistant fruit by plucking it when it comes between the additional tool and any one of the peripheral operating tools thanks to their combined movements, at least at the base joint level. Furthermore, the angle of the operating tools compared with the additional tool, and/or an appropriate choice of the dimensions of this additional tool, permits them to grip, and pluck different sized fruit, thus ensuring versatility and maximum efficiency of the tool.

## Claims

1. Multi-tool equipment for mechanical harvesting of olives, coffee drupes and/or other fruit from their respective plants, comprising a stationary supporting body (11) with a front and rear face, a number of rotating operating tools (12, 13) protruding from the front face of said body, and a geared motor group (14) on the rear face of said body and designed to rotate said tools using a parallel axes drive transmission housed in said supporting body, at least a manual gripping means (15) for using the tool for aerial work, and means for powering the geared motor group passing through said gripping means, wherein:
- the supporting body (11) has a radial arrangement with two, three, four or more arms that extend from a central point,
- the drive transmission units lead from the geared motor group and extend along all the arms of said body starting from its central point,
- the operating tools comprise a series of peripheral tools (12), with at least one tool placed at the end of each arm of the supporting body and made to turn by said terminal unit of said drive transmission, and at least an additional tool (13) that extends between said peripheral tools starting from the centre of the supporting body and powered in its turn by a central unit of said drive transmission, and wherein each peripheral tool (12) is made up of a rod with one end fixed to the rotation axis of a respective control transmission unit by means of a base adapter joint, whereas its opposite end is free, **characterized in that** each peripheral tool (12) is slanted, for all its length compared to said rotation axis starting from the front face of the supporting body, and **in that** the additional tool (13) has a shape different from said peripheral tools and rotates about an axis coincident with its geometric axis.

2. Tool according to claim 1, wherein the additional tool (13) is blade shaped, perpendicular to the front face of the supporting body and turning on its geometric axis.

3. Tool according to claim 2, wherein said blade forming the additional tool has almost semi-circular, parallel or sloping sides, a pointed or rounded free end and perhaps openings provided crossways.

4. Tool according to previous claim 1, wherein the additional tool is roundish (23), sphere shaped, ellipsoidal or cylindrical.

5. Tool according to any of the previous claims, wherein each peripheral tool (12) turns on its axis driven by its respective power transmission unit and at the same time performs a turning motion around its rotation axis following wider circular trajectories and increased speeds from the base joint up to its free end, depending on its inclination compared to the front face of the supporting body, in which the additional tool (13) turns between the peripheral tools (12), and in which said peripheral tools move towards and move away from the additional tool in response to their turning motion.

6. Tool according to any of the previous claims, wherein the arms of said supporting body are either the same or different lengths, and in which the rod length of each peripheral tool can be flexible or rigid, rectilinear, corrugated or shaped in some way, rounded, elliptic or polygonal and is connected to the base using a removable and interchangeable system.

7. Tool according to any of the previous claims, wherein said peripheral tools and said additional tool are operated to turn either in unison or out of phase with equal or different turning speed.

## Patentansprüche

1. Universell einsetzbare Vorrichtung zur Ernte von Oliven, Kaffeebohnen und/oder anderen Früchten von den jeweiligen Pflanzen mit einem bodenfesten Stützkörper (11), der über eine Vorder- und eine Rückseite verfügt, mit einer Reihe rotierender Arbeitsvorrichtungen (12, 13), die an der Vorderseite des genannten Stützkörpers hervortreten, sowie mit einer Motor-/Getriebeeinheit (14) an der Rückseite des genannten Stützkörpers zur Rotation der genannten Vorrichtung mit Hilfe eines Zapfwellenbetriebs mit Parallelachsen in dem genannten Stützkörper. Zusätzlich verfügt die Vorrichtung über zumindest eine manuelle Haltevorrichtung (15) für die Benutzung der Vorrichtung in der Luft, sowie über Mittel zur Versorgung der Motor-/Getriebeeinheit in der genannten Haltevorrichtung. Die Vorrichtung zeichnet sich durch folgende Besonderheiten aus:
- der Stützkörper (11) ist sternförmig mit zwei, drei, vier oder mehr Armen angeordnet, die von einem zentralen Punkt ausgehen;
- der Zapfwellenbetrieb geht von der Motor-/Getriebeeinheit aus und überträgt sich vom zentralen Punkt aus auf alle Arme des genannten Körpers;
- die Arbeitsvorrichtungen beinhalten eine Reihe peripherer Vorrichtungen (12), wobei zumindest eine Vorrichtung am Ende jedes Arms des Stützkörpers liegt und von einer Endeinheit des genannten Zapfwellenbetriebs in Rotation gesetzt wird, sowie zumindest eine zusätzliche Vorrichtung (13) sich in der Mitte des Stützkörpers zwischen den genannten peripheren Vorrichtungen befindet. Diese zusätzliche Vorrichtung wird von einer Zentraleinheit des genannten Zapfwellenbetriebs angetrieben, und jede periphere Vorrichtung (12) besteht aus einer Stange, die an einem Ende mit der Rotationsachse der jeweiligen Einheit zur Schaltungsübertragung durch eine Basis-Adapterkupplung befestigt ist, während das entgegengesetzte Ende frei bleibt,
Vorrichtung **dadurch gekennzeichnet**, jede periphere Vorrichtung (12) gegenüber der genannten Rotationsachse ausgehend von der Vorderseite des Stützkörpers über die gesamte Länge schräg liegt, sowie dadurch, dass die zusätzliche Vorrichtung (13) sich von der Form her von den genannten peripheren Vorrichtungen unterscheidet und rund um eine mit ihrer geometrischen Achse übereinstimmende Achse rotiert.

2. Vorrichtung gemäß den Ansprüchen 1, wobei die zusätzliche Vorrichtung (13) schaufelförmig, senkrecht zur Vorderseite des Stützkörpers und rund um die eigene geometrische Achse drehbar ist.

3. Vorrichtung gemäß dem Anspruch 2, wobei die genannte Schaufel der zusätzlichen Vorrichtung parallele oder schräge etwa halbkreisförmige Flanken, ein spitzes bzw. abgerundetes freies Ende sowie eventuell transversale Öffnungen aufweist.

4. Vorrichtung gemäß den oben ausgeführten Ansprüchen 1, wobei die zusätzliche Vorrichtung kugelig in der Form einer Kugel, einer Ellipse oder eines Zylinders ist.

5. Vorrichtung gemäß einem beliebigen der vorgenannten Ansprüche, wobei jede periphere Vorrichtung (12) um die eigene Achse rotiert, vom jeweiligen Zapfwellenbetrieb gesteuert ist und sich zugleich in einer größeren kreisförmigen Bahn und mit höherer Geschwindigkeit ausgehend von der Basiskupplung bis zum freien Ende rund um die eigene Rotationsachse dreht, und zwar abhängig von der Neigung gegenüber der Vorderseite des Stützkörpers, in dem die zusätzliche Vorrichtung (13) zwischen den peripheren Vorrichtungen (12) rotiert und in dem sich die genannten peripheren Vorrichtungen an die zusätzliche Vorrichtung entsprechend ihrer Umlaufbahn annähern und davon entfernen.

6. Vorrichtung gemäß einem beliebigen der vorgenannten Ansprüche, wobei die Arme des genannten Stützkörpers beide gleich oder verschieden lang sind und die Stange jeder peripheren Vorrichtung biegsam oder fest, geradlinig bwz. gewellt sein oder irgendeine Art von Profil aufweisen kann, einen runden, elliptischen oder polygonalen Querschnitt hat und an die Basiskupplung durch ein abnehmbares oder austauschbares System befestigt ist.

7. Vorrichtung gemäß einem beliebigen der vorgenannten Ansprüche, wobei die genannten peripheren Vorrichtungen und die genannte zusätzliche Vorrichtung so angetrieben werden, dass sie alle gekuppelt oder phasenverschoben mit gleichen oder verschiedenen Rotationsgeschwindigkeiten rotieren.

## Revendications

1. Dispositif à outils multiples pour la récolte mécanique des olives, baies de café ou d'autres fruits sur leurs arbres respectifs, comprenant un corps de support stationnaire (11) ayant une face frontale et une face postérieure, une série d'outils opérateurs rotatifs (12, 13) saillant de la face frontale dudit corps, et un groupe moteur-réducteur (14) sur la face postérieure dudit corps et destiné à la rotation desdits outils à travers une unité de transmission du mouvement à axes parallèles renfermée dans ledit corps de support, au moins un moyen (15) de prise manuelle pour l'utilisation de l'équipement pour un travail aérien, et des moyens pour l'alimentation du groupe moteur-réducteur passant dans ledit moyen de prise, dans lequel :
- le corps de support (11) a une disposition en radial avec deux, trois, quatre ou plus bras qui s'étendent à partir d'un point central ;
- les unités de transmission du mouvement partent du groupe moteur-réducteur et s"étendent dans tous les bras dudit corps en partant de son point central ;
- les outils opérateurs comprennent une série d'outils périphériques (12), ayant au moins un outil placé à l'extrémité de chaque bras du corps de support et commandé en rotation par une unité terminale de ladite transmission du mouvement, et au moins un outil supplémentaire (13) au centre du corps de support, qui s'étend entre lesdits outils périphériques et est actionné à son tour par une unité centrale de ladite transmission du mouvement, et dans lequel chaque outil périphérique (12) est composé d'une tige ayant son extrémité fixée à l'axe de rotation d'une unité de la transmission respective au moyen d'un joint adaptateur de base, tandis que son extrémité opposée est libre,
**caractérisé en ce que** chaque outil périphérique (12) est incliné sur toute sa longueur par rapport audit axe de rotation à partir de la face frontale du corps de support, et **en ce que** l'outil supplémentaire (13) a une forme différente desdits outils périphériques et tourne autour d'un axe coïncidant avec son axe géométrique.

2. Dispositif suivant la revendication 1, dans lequel l'outil supplémentaire (13) est en forme de palette, perpendiculaire à la face frontale du corps de support et pivotant autour de son axe géométrique.

3. Dispositif suivant la revendication 2, dans lequel ladite palette formant l'outil supplémentaire a des flancs à peu près semi-circulaires, parallèles ou inclinés, une extrémité libre à pointe ou arrondie et des éventuelles ouvertures transversales.

4. Dispositif suivant les revendications précédentes 1, dans lequel l'outil supplémentaire est arrondi (23), à forme de sphère, ellipsoïdale ou cylindrique.

5. Dispositif suivant l'une quelconque des revendications précédentes, dans lequel chaque outil périphérique (12) tourne autour de son axe commandé par l'unité de transmission du mouvement respective et suit au même moment un mouvement de révolution autour de son axe de rotation en suivant des trajectoires circulaires plus amples et des vitesses plus grandes à partir du joint de base jusqu'à son extrémité libre, en fonction de son inclinaison par rapport à la face frontale du corps de support, dans lequel l'outil supplémentaire (13) tourne entre les outils périphériques (12), et dans lequel lesdits outils périphériques se rapprochent et s'éloignent de l'outil supplémentaire en réponse à leur mouvement de révolution.

6. Dispositif suivant l'une quelconque des revendications précédentes, dans lequel les bras dudit corps de support sont tous de longueur égale ou différente, et dans lequel la tige de chaque outil périphérique en longueur peut être flexible o rigide, rectiligne, ondulée ou quoi qu'il en soit profilée, de section ronde, elliptique ou polygonale et est reliée au joint de base dans un système amovible et interchangeable.

7. Dispositif suivant l'une quelconque des revendications précédentes, dans lequel lesdits outils périphériques et ledit outil supplémentaire sont actionnés pour tous tourner en phase ou en déphasage à des vitesses de rotation égales ou différentes.
